(19) Europäisches Patentamt
European Patent Office
Office européen des brevets

(11) EP 0 675 906 B2

(12) NEW EUROPEAN PATENT SPECIFICATION

(45) Date of publication and mention
of the opposition decision:
10.01.2007 Bulletin 2007/02

(45) Mention of the grant of the patent:
17.02.1999 Bulletin 1999/07

(21) Application number: 94904842.5

(22) Date of filing: 14.12.1993

(51) Int Cl.:
C08F 210/16 (2006.01)    C08L 23/16 (2006.01)
C08J 5/18 (2006.01)      C08F 10/00 (2006.01)

(86) International application number:
PCT/US1993/012166

(87) International publication number:
WO 1994/014855 (07.07.1994 Gazette 1994/15)

(54) **LINEAR LOW DENSITY POLYETHYLENE FILM**

LINEARER FILM MIT NIEDRIGER DICHTE

FILM DE POLYETHYLENE LINEAIRE DE FAIBLE DENSITE

(84) Designated Contracting States:
BE DE FR GB IT NL

(30) Priority: 28.12.1992 US 997421
25.03.1993 US 36796

(43) Date of publication of application:
11.10.1995 Bulletin 1995/41

(60) Divisional application:
98107314.1 / 0 859 025

(73) Proprietor: EXXONMOBIL OIL CORPORATION
Fairfax, VA 22037 (US)

(72) Inventors:
• CHERUVU, Subrahmanyam
Robbinsville, NJ 08691 (US)
• LO, Frederick, Yip-Kwai
Edison, NJ 08818 (US)
• ONG, Shimay, Christine
Warren, NJ 07059 (US)

(74) Representative: Dew, Melvyn John
Exxon Chemical Europe Inc.
Law Technology
Hermeslaan 2
1831 Machelen (BE)

(56) References cited:
EP-A- 0 020 818          EP-A- 0 048 227
EP-A- 0 323 716          EP-A- 0 351 189
EP-A- 0 363 029          EP-A- 0 386 593
EP-A- 0 406 912          EP-A- 0 516 458
EP-A- 0 552 945          WO-A-94/03509
US-A- 4 232 619          US-A- 4 243 619
US-A- 4 302 565          US-A- 4 478 988
US-A- 4 808 561          US-A- 4 857 611
US-A- 4 912 075          US-A- 4 931 517
US-A- 5 115 068          US-A- 5 202 398
US-A- 5 204 419          US-A- 5 210 167
US-A- 5 218 071

• SP' 92-Polyethylene World Congress, Zürich, CH,
December 7-9, 1992

**Description**

The invention relates to a linear low density polyethylene (LLDPE) film. All densities in this specification are in g/cm$^3$, unless otherwise stated.

The invention broadly relates to a film consisting of linear low density polyethylene, exhibiting a density of at least 0.900 g/cm and an MFR of 15 to 25.

US 4243619 discloses a process for making film from a narrow molecular weight distribution low density ethylene hydrocarbon copolymer, which process comprises extruding said copolymer through a die gap of greater than about 50 mils. The film exhibits an excellent balance of optical and mechanical properties.

According to one aspect of the invention there is provided a film, exhibiting a haze, determined by ASTM D-1003, ranging from 3 to 20, a dart impact value, measured by ASTM D-1709 Method A, which ranges from grater than 100 and up to 2000, a hexane extractables content of 0.3 to 1.2 wt %, said film comprising a LLDPE comprising ethylene and an alpha olefin of 3 to 10 carbon atoms, which has a density ranging from 0.900 to 0.929; MFR of 15 to 20 a $M_w/M_n$ of 2.5 to 3.0 and a melting point ranging from 95°C to 135°C.

Preferably the film is characterised by an MI($I_2$) of 0.01 to 5.0, more preferably 0.1 to 5.0. still more preferably 0.5 to 3.0, and most preferably 0.8 to 2.0.

The alpha olefin is preferably hexene-1.

The dart impact preferably ranges from greater than 800 up to 2000.

Preferably the density ranges from 0.911 to 0.929, more preferably 0.911 to 0.922.

It is preferable that the film is characterised by tensile yield, measured by ASTM D882 which ranges from 0.7 to 3000 psi (4.8 to 21000 kPa), more preferably 1.4 to 3000 psi (9.6 to 21000 kPa).

The Copolymer Products

The catalytically produced LLDPE products used to produce the films of the invention have various unique properties.

The copolymer products may contain 0.1 to 2 ppm of Zr. The composition has an average particle size of 0.015-0.035 inches (0.38 to 0.89 mm), and a settled bulk density from 25 to 36 lb/ft$^3$ (400 to 577 kg/m$^3$). The particles have spherical shape and are non-porous.

The products are low density, characterized by a density as low as 0.902. For applications herein, the density is greater than .900, generally greater than 0.910, preferably ranging from 0.911 to 0.929, most preferably ranging from 0.915 to 0.922.

Significantly, the narrow molecular weight distribution low density copolymers have been produced with MI of 1 and less than 1, down to 0.01. The low density products of the invention exhibit a MI which can range from 0.01 to 5, generally from 0.1 to 5, and preferably from 0.5 to 4, and most preferably 0.8 to 2.0. For blown film the MI of the copolymers is preferably 0.5 to 1.5; and for cast film the MI is preferably from 2 to 4.

The low density products of the invention exhibit a melt flow ratio (MFR) range of 15 to 20. In products of the Examples the MFR ranges from 16 to 18. MFR is the ratio $I_{21}/I_2$ [wherein $I_{21}$ is measured at 190°C in accordance with ASTM D-1238, Condition F; and $I_2$ is measured at 190°C in accordance with ASTM D-1238, Condition E.]

Melting points of the products range from 95°C to 130°C. Furthermore, the hexane extractables content is very low, typically ranging from 0.3 to 1.0 wt.%. The $M_w/M_n$ of these products ranges from 2.5 to 3.0: $M_w$ is the weight average molecular weight and $M_n$ is the number average molecular weight, each of which is calculated from molecular weight distribution measured by GPC (gel permeation chromatography).

When fabricated into films, the films of the copolymers exhibit balanced tear strength, as measured by ASTM D1922, which ranges from 50 to 600, preferably from 220 to 420 for machine direction and from 200 to 700 preferably from 200 to 600 for the transverse direction. They also give high modulus, as measured by ASTM D882 which ranges from 10000 to 60000 psi (69 to 410 MPa), preferably from 22000 to 45000 psi (150 to 310 MPa) : high tensile yield as measured by ASTM D882 which ranges from 0.7 to 3000 psi (4.8 to 21000 KPa), preferably from 1.8 to 2300 psi (12 to 16000 KPa).

When fabricated into films, the films of the copolymers exhibit excellent optical qualities as determined by haze studies, measured by ASTM D-1003 which means that haze is preferably between 3 to 20, preferably from 4 to 10. Films of inferior haze properties exhibit a haze of greater than 10. The importance of the optical properties of LLDPE depend on the intended application of the LLDPE resin. It is generally accepted that the poor optical properties of normal LLDPEs (haze >10 and gloss <50) severely limits their use in applications where film opticals are important. The invention LLDPEs with their improved opticals (haze <10 and gloss >70) significantly broaden the application areas

When fabricated into films, the films exhibit dart impact properties as measured by ASTM D-1709 Method A. For example, the films of the present invention exhibit superior dart drop impact values over the films prepared with such previously-known catalysts. Films of the invention exhibit Dart Drop Impact values as measured by ASTM D-1709 from 100 to 2000, preferably from 150 to 1500. The most preferred films exhibit densities of .911 to .922 and dart drops impact values of greater than 800, generally from 800 to 1500, and up to a measurement which characterizes the product as unbreakable, e.g., a dart drop impact value of 2000.

The above properties are for a 1 mil (25 microns) film made under a standard fabricating condition outlined in the-Examples, on a ¾ inch (1.9 cm) Brabender extruder, 2½" (6.4 cm) Brampton Film Extruder or a 3½" (8.9 cm) Glouster Film Extruder. It is apparent to those familiar to the field that the film properties may be further modified by optimizing the fabricating conditions or by addition of LDPE or nucleating agents.

The copolymers are produced with ethylene and one or more $C_3$-$C_{10}$ alpha-olefins, in accordance with the invention. The copolymers contain at least 80 weight % ethylene units. The comonomers used in the present invention preferably contain 3 to 8 carbon atoms. Suitable alpha olefins include propylene, butene-1, pentene-1, hexene-1, 4-methylpentene-1, heptene-1 and octene-1. Preferably, the alpha-olefin comonomer is 1- butene, 1-hexene, and 1-octene. The most preferred alpha olefin is hexene-1. Thus, copolymers having two monomeric units are possible as well as terpolymers having three monomeric units. Particular examples of such polymers include ethylene/1-butene copolymers, ethylene/1-hexene copolymers, ethylene/4-methyl-1-pentene copolymers, ethylene/1-butene/1-hexene terpolymers, ethylene/propylene/1-hexene terpolymers and ethylene/propylene/1-butene terpolymers.

Hydrogen may be used as a chain transfer agent in the polymerization reaction used for the present invention. Any gas inert to the catalyst and reactants can also be present in the gas stream.

These products are prepared in the presence of catalyst, preferably under either slurry or fluid bed catalytic polymerization conditions described below. When made in the gas phase fluid bed process, on pilot plant scale, the product is dry and solvent-free and comprises spherical, non-porous particles, which has an average particle size of 0.015 to 0.035 inches (0.38 to 0.89 mm) and a settled bulk density of from 25 to 36 lb/ft$^3$ (400 to 577 kg/m$^3$).

The Catalyst

The catalyst compositions employed to produce films of the present invention contain one transition metal in the form of a metallocene which has an activity of at least 2,000 g polymer/g catalyst or 1,000 kg polymer/g transition metal.

The catalysts comprise a carrier, an aluminoxane and at least one metallocene.

The carrier material is a solid, particulate, porous, inorganic or organic materials, but preferably inorganic material, such as an oxide of silicon and/or of aluminum. The carrier material is used in the form of a dry powder having an average particle size of from 1 micron (1 micron = 1 $\mu$m) to 250 microns, preferably from 10 microns to 150 microns. If necessary, the treated carrier material may be sieved to ensure that the particles have an average particle size of preferably less than 150 microns. This is highly desirable in forming narrow molecular weight LLDPE, to reduce gels. The surface area of the carrier is at least 3 m$^2$/g, and preferably at least 50 m$^2$/g up to 350 m$^2$/g. When the carrier is silica, it is heated to preferably 100°C to 850°C and most preferably at about 250°C. The carrier material must have at least some active hydroxyl (OH) groups to produce the catalyst composition of this invention.

In the most preferred embodiment, the carrier is silica which, prior to the use thereof in the first catalyst synthesis step, has been dehydrated by fluidizing it with nitrogen and heating at about 250°C for about 4 hours to achieve a surface hydroxyl group concentration of about 1.8 mmols/g. The silica of the most preferred embodiment is a high surface area, amorphous silica (surface area = 300 m$^2$/g; pore volume of 1.65 cm$^3$/g), and it is a material marketed under the tradenames of Davison 952-1836, Davison 952 or Davison 955 by the Davison Chemical Division of W.R. Grace and Company. The silica is in the form of spherical particles, e.g., as obtained by a spray-drying process.

To form the catalysts, all catalyst precursor components can be dissolved with aluminoxane and reacted with a carrier. The carrier material is reacted with an aluminoxane solution, preferably methylaluminoxane, in a process described below. The class of aluminoxanes comprises oligomeric linear and/or cyclic alkylaluminoxanes represented by the formula:

R-(Al(R)-O)$_n$-AlR$_2$ for oligomeric, linear aluminoxanes; and
(-Al(R)-O-)$_m$ for oligomeric cyclic aluminoxane

wherein n is 1-40, preferably 10-20, m is 3-40, preferably 3-20 and R is a $C_1$-$C_8$ alkyl group and preferably methyl.

Methylaluminoxane (MAO) is a mixture of oligomers with a very wide distribution of molecular weights and usually with an average molecular weight of about 1000. MAO is typically kept in solution in toluene.

In a preferred embodiment, of aluminoxane incorporation into the carrier, one of the controlling factors in the aluminoxane incorporation into the carrier material during catalyst synthesis is the pore volume of the silica. In this preferred embodiment, the process of impregnating the carrier material is by infusion of the aluminoxane solution, without forming a slurry of the carrier material, such as silica, in the aluminoxane solution. The volume of the solution of the aluminoxane is sufficient to fill the pores of the carrier material without forming a slurry in which the volume of the solution exceeds the pore volume of the silica; accordingly and preferably, the maximum volume of the aluminoxane solution is and does not exceed the total pore volume of the carrier material sample. That maximum volume of the aluminoxane solution insures that no slurry of silica is formed. Accordingly, if the pore volume of the carrier material is 1.65 cm$^3$/g, then the volume of aluminoxane will be equal to or less than 1.65 cm$^3$/g of carrier material. As a result of this proviso, the impregnated carrier material will appear dry immediatedly following impregnation although the pores of the carrier will be filled with <u>inter alia</u> solvent.

Solvent may be removed from the aluminoxane impregnated pores of the carrier material by heating and/or under a positive pressure induced by an inert gas, such as nitrogen. If employed, the conditions in this step are controlled to reduce, if not to eliminate, agglomeration of impregnated carrier particles and/or crosslinking of the aluminoxane. In this step, solvent can be removed by evaporation effected at relatively low elevated temperatures of above 40°C and below 50°C. Although solvent can be removed by evaporation at relatively higher temperatures than that defined by the range above 40°C and below 50°C, very short heating times schedules must be employed.

In a preferred embodiment, the metallocene is added to the solution of the aluminoxane prior to reacting the carrier with the solution. Again the maximum volume of the aluminoxane solution also including the metallocene is the total pore volume of the carrier material sample. The mole ratio of aluminoxane provided aluminum, expressed as Al, to metallocene metal expressed as M (e.g. Zr), ranges from 50 to 500, preferably 75 to 300, and most preferably 100 to 200. An added advantage of the present invention is that this Al:Zr ratio can be directly controlled. In a preferred embodiment the aluminoxane and metallocene compound are mixed together at a temperature of 20 to 80°C, for 0.1 to 6.0 hours, prior to reaction with the carrier. The solvent for the metallocene and aluminoxane can be appropriate solvents, such as aromatic hydrocarbons, halogenated hydrocarbon or halogenated aromatic hydrocarbons, preferably toluene.

The metallocene compound has the formula $Cp_mMA_nB_p$ in which Cp is an unsubstituted or substituted cyclopentadienyl group, M is zirconium or hafnium and A and B belong to the group including a halogen atom, hydrogen or an alkyl group. In the above formula of the metallocene compound, the preferred transition metal atom M is zirconium. In the above formula of the metallocene compound, the Cp group is an unsubstituted, a mono- or a polysubstituted cyclopentadienyl group. The substituents on the cyclopentadienyl group can be preferably straight-chain or branched $C_1$-$C_6$ alkyl groups. The cyclopentadienyl group can be also a part of a bicyclic or a tricyclic moiety such as indenyl, tetrahydroindenyl, fluorenyl or a partially hydrogenated fluorenyl group, as well as a part of a substituted bicyclic or tricyclic moiety. In the case when m in the above formula of the metallocene compound is equal to 2, the cyclopentadienyl groups can be also bridged by polymethylene or dialkylsilane groups, such as -CH$_2$-, -CH$_2$-C$_2$-, -CR'R''- and -CR'R''-CR'R''- where R' and R'' are short alkyl groups or hydrogen, -Si(CH$_3$)$_2$-, Si(CH$_3$)$_2$-CH$_2$-CH$_2$-Si(CH$_3$)$_2$- and similar bridge groups. If the A and B substituents in the above formula of the metallocene compound are halogen atoms, they belong to the group of fluorine, chlorine, bromine or iodine. If the substituents A and B in the above formula of the metallocene compound are alkyl or aromatic groups, they are preferably straight-chain or branched $C_1$-$C_8$ alkyl groups, such as methyl, ethyl, n-propyl, isopropyl, n-butyl, isobutyl, n-pentyl, n-hexyl or n-octyl.

Suitable metallocene compounds include bis(cyclopentadienyl)metal dihalides, bis(cyclopentadienyl)metal hydridohalides, bis(cyclopentadienyl)metal monoalkyl monohalides, bis(cyclopentadienyl)metal dialkyls and bis(indenyl) metal dihalides wherein the metal is titanium, zirconium or hafnium, halide groups are preferably chlorine and the alkyl groups are $C_1$-$C_6$ alkyls. Illustrative, but nonlimiting examples of metallocenes include bis(cyclopentadienyl)zirconium dichloride, bis(cyclopentadienyl)hafnium dichloride, bis(cyclopentadienyl)zirconium dimethyl, bis(cyclopentadienyl)hafnium dimethyl, bis(cyclopentadienyl)zirconium hydridochloride, bis(cyclopentadienyl)hafnium hydridochloride, bis(pentamethylcyclopentadienyl)zirconium dichloride, bis(pentamethylcyclopentadienyl)hafnium dichloride, bis (n-butylcyclopentadienyl)zirconium dichloride, bis(isobutylcyclopentadienyl) zirconium dichloride, cyclopentadienylzirconium trichloride, bis(indenyl)zirconium dichloride, bis(4,5,6,7-tetrahydro-1-indenyl)zirconium dichloride, and ethylene-[bis (4,5,6,7-tetrahydro-1-indenyl)] zirconium dichloride. The metallocene compounds utilized within the embodiment of this art can be used as crystalline solids, as solutions in aromatic hydrocarbons or in a supported form.

The catalyst comprising a metallocene compound and an aluminoxane in particulate form is fed to the fluid bed reactor for gas phase polymerizations and copolymerizations of ethylene and higher alpha olefins.

<u>The Process Conditions</u>

It is essential to operate the fluid bed reactor at a temperature below the sintering temperature of the polymer particles. To ensure that sintering will not occur, operating temperatures below the sintering temperature are desired. For the production of ethylene copolymers in the process of the present invention an operating temperature of 60° to 115°C is preferred, and a temperature of 75° to 95°C is most preferred.

The fluid bed reactor is operated at pressures of 150 to 350 psi (1 to 2.4 MPa), with operation at the higher pressures in such ranges favoring heat transfer since an increase in pressure increases the unit volume heat capacity of the gas.

A "diluent" gas is employed with the comonomers. It is nonreactive under the conditions in the polymerization reactor. The diluent gas can be nitrogen, argon, helium, methane and ethane.

In fluidized bed reactors, the superficial gas velocity of the gaseous reaction mixture through the bed must exceed the minimum flow required for fluidization, and preferably is at least 0.2 ft/s (6 cm/s) above the minimum flow. Ordinarily the superficial gas velocity does not exceed 5.0 ft/s (1.5 m/s), and most usually no more than 2.5 ft/s (0.77 m/s) is sufficient. The feed stream of gaseous monomer, with or without inert gaseous diluents, is fed into the reactor at a space time yield of about 2 to 10 pounds/hour/cubic foot of bed volume.

A particularly desirable method for producing linear low density polyethylene polymers according to the present invention is in a single fluid bed reactor unit which is disclosed in US-A-4481301.

For film production, the products may contain any of various additives conventionally added to polymer compositions such as lubricants, microtalc, stabilizer, antioxidants, compatibilizers and pigments. These reagents can be employed to stabilize the products against oxidation. For example, additive packages comprising 400-1200 ppm hindered phenol(s); 700-2000 ppm phosphites; 250 to 1000 ppm antistats and 250-1000 ppm stearates, for addition to the resin powders, can be used for pelletization. The polymers can be added directly to a blown film extruder, e.g., a Sterling extruder, to produce films having a thickness, for example of 0.5 to 5 mils (13 to 130 microns).

The following Examples further illustrate the essential features of the invention.

The properties of the polymers produced in the Examples were determined by the following test methods:

| | |
|---|---|
| Density | ASTM D-1505 - a plaque is made and conditioned for one hour at 100°C to approach equilibrium crystallinity. Measurement for density is then made in a density gradient column; reported as g/cm$^3$. |
| Melt Index | ASTM D-1238 - Condition E (MI), $I_2$ Measured at 190°C - reported as grams per 10 minutes. |
| High Load | ASTM D-1238 - Condition F |
| Melt Index | Measured at 10.5 times the weight used in (HLMI), $I_{21}$ the melt index test above. |
| Melt Flow Ratio (MFR) | $\dfrac{I_{21}}{I_2}$ |

<u>Example 1</u>

Raw materials used in catalyst preparation included 505 g of Davison 952-1836 silica, 698 g of methylaluminoxane in toluene solution (30 wt.% MAO), 7.148 g of bis(n-butylcyclopentadienyl) zirconium dichloride. The steps of the catalyst preparation are set forth below:

1. Dehydrate the 955 silica at 250°C for 4 hours using air to purge. Then purge with nitrogen on cooling.
2. Transfer the silica to a mix-vessel.
3. Add 7.148 g of bis(n-butylcyclopentadienyl) zirconium dichloride and 698 g of methylaluminoxane to a bottle.
4. Agitate the catalyst solution in the bottle until the metallocene dissolves in the MAO solution.
5. Transfer the MAO and metallocene solution into the mix-vessel containing the dehydrated 955 silica slowly while agitating the silica bed vigorously to make sure that the catalyst solution is well dispersed into the silica bed.
6. After the addition, continue to agitate the catalyst for 30 mins.
7. Start drying the catalyst by purging with nitrogen for 5 hours at 45°C.
8. Sieve the catalyst to remove particles larger than 150 microns.
9. The catalyst has the following analysis:
Yield = 914 g catalyst (from 500 g of silica)

Al = 10 wt.%

Zr = 0.2 wt.%

<u>Example 2</u>

To produce a polymer for low density film, 0.918 g/cm$^3$, 1 MI, 17 MFR, in a fluid bed gas phase reactor the following process conditions were employed.

| Process Conditions: | |
| --- | --- |
| Fluidization velocity | 1.7 ft/s (0.52 m/s) |
| Residence time | 2.5 hours |
| Temperature | 77.5 °C |
| Ethylene | 180 psi (1200 KPa) |
| Hexene | 3.6 psi (25 KPa) |
| Isopentane | 50 psi (340 KPa) |
| Carbon dioxide | 1.1 ppm |
| Ash | 200 to 250 ppm |

The catalyst was that of Example 1.

Example 3

To produce a polymer for cast film of 0.918 g/cm$^3$ density, 2.5 MI, 16 MFR, the following process conditions were employed:

| Fluidization velocity | 1.7 ft/s (0.52 m/s) |
| --- | --- |
| Residence time | 2.5 hours |
| Temperature | 77.5 °C |
| Ethylene | 180 psi (1200 KPa) |
| Hexene | 3.6 psi (25 KPa) |
| Isopentane | 38 psi (260 KPa) |
| Ash | 100 ppm |

The catalyst was that of Example 1.

1. Resin Characteristics

When compared to a standard ethylene-hexene copolymer prepared with commercial Ziegler catalyst, the metallocene of Example 1 produced resins via the gas phase process which exhibit the following characteristics: (1) narrower molecular weight distribution (2) more uniform short chain branching distribution, (3) lower melting point (4) lower extractables, and (5) lower haze.

An example of the key resin characteristics of a 1.0 $I_2$, 0.918 density resin is shown below:

Table I

| LLDPE Resin Characteristics 1.0 $I_2$, 0.918 density | | |
| --- | --- | --- |
| Property | Commercial Ziegler | Metallocene (of Ex.1) |
| $M_w/M_n$ | 4.5 | 2.6 |
| MFR | 28 | 18 |
| Melting point | 125°C | 115°C |

2. End-use property

These metallocene LLDPE resins can be processed readily on commercial equipment without modification. They also offer superior properties compared to those resins produced using commercial Ziegler/Natta catalysts. An example is given below:

Table II

| LLDPE Film Property Comparison 1.0 $I_2$, 0.918 density 2:1 BUR, 250 lb/hr (110 Kg/hr) | | |
|---|---|---|
| Property | Commercial Ziegler | Metallocene (of Ex. 1) |
| Melt Pressure (psi) | 5000 (34MPa) | 5500 (38MPa) |
| Bubble Stability | very good | very good |
| MD Modulus (psi) | 28000 (193MPa) | 25000 (172MPa) |
| Dart Drop, (g) | 180-450 | >800 |
| MD Tear (g/mil) | 350-450 | 370 |
| Extractables, wt.% | 2.5 | 0.6 |
| Haze, % | 10-18 | 5-7 |
| Tensile Yield (psi) | 1700 (12MPa) | 2000 (14MPa) |
| Yield Elongation % | 24 | 71 |

**Claims**

1. A film, exhibiting a haze, determined by ASTM D-1003, ranging from 3 to 20, a dart impact value, measured by ASTM D-1709 Method A, which ranges from greater than 100 and up to 2000, a hexane extractables content of 0.3 to 1.2 wt.%, said film comprising a LLDPE comprising ethylene and an alpha olefin of 3 to 10 carbon atoms, which has a density ranging from 0.900 to 0.929; MFR of 15 to 20; a $M_w/M_n$ of 2.5 to 3.0 and a melting point ranging from 95°C to 135°C,

2. A film according to claim 1, wherein the LLDPE is further **characterized by** an MI($I_2$) of 0.01 to 5.0.

3. A film according to claim 1, wherein the alpha olefin is hexene-1.

4. A film according to claim 1, wherein said dart impact ranges from greater than 800 up to 2000.

5. A film according to claim 1, wherein said density ranges from 0.911 to 0.929.

6. A film according to claim 1, wherein said density ranges from 0.911 to 0.922.

7. A film according to claim 1, which is **characterized by** tensile yield, measured by ASTM D882 which ranges from 0.7 to 3000 psi (4.8 to 21000 KPa).

8. A film according to Claim 7, which is **characterized by** tensile yield, measured by ASTM D882 which ranges from 1.4 to 3000 psi (9.6 to 21000 KPa).

**Patentansprüche**

1. Folie, die eine Trübung, nach ASTM D-1003 bestimmt, im Bereich von 3 bis 20, einen nach ASTM D-1709, Methode A, gemessenen Kerbschlagzähigkeitswert bei Stiften im Bereich von mehr als 100 und bis zu 2000 und einen Gehalt an mit Hexan extrahierbaren Bestandteilen von 0,3 bis 1,2 Gew.-% aufweist, wobei die Folie LLDPE, das Ethylen und ein $\alpha$-Olefin mit 3 bis 10 Kohlenstoffatomen umfasst, enthält, welches eine Dichte im Bereich von 0,900 bis 0,929, ein MFR von 15 bis 20, ein $M_w/M_n$ von 2,5 bis 3,0 und einen Schmelzpunkt im Bereich von 95 bis 135°C aufweist.

2. Folie nach Anspruch 1, wobei das LLDPE außerdem durch ein MI($I_2$) von 0,01 bis 5,0 **gekennzeichnet** ist.

3. Folie nach Anspruch 1, wobei das $\alpha$-Olefin Hexen-1 ist.

4. Folie nach Anspruch 1, wobei die Kerbschlagzähigkeit bei Stiften im Bereich von mehr als 800 bis zu 2000 liegt.

5. Folie nach Anspruch 1, wobei die Dichte im Bereich von 0,911 bis 0,929 liegt.

**6.** Folie nach Anspruch 1, wobei die Dichte im Bereich von 0,911 bis 0,922 liegt.

**7.** Folie nach Anspruch 1, die durch eine nach ASTM D882 gemessene Streckgrenze im Bereich von 0,7 bis 3000 psi (4,8 bis 21000 kPa) **gekennzeichnet** ist.

**8.** Folie nach Anspruch 7, die durch eine nach ASTM D882 gemessene Streckgrenze im Bereich von 1,4 bis 3000 psi (9,6 bis 21000 kPa) **gekennzeichnet** ist.

**Revendications**

**1.** Film présentant un voile, tel qu'il est déterminé selon la norme ASTM D-1003, qui est compris dans la gamme de 3 à 20, une valeur d'impact de masse tombante mesurée selon la méthode A de la norme ASTM D-1709, qui est comprise entre plus de 100 jusqu'à 2000, une teneur en matières extractibles par l'hexane de 0,3 à 1,2 % en poids, ce film comprenant un PELBD comprenant de l'éthylène et une alpha-oléfine de 3 à 10 atomes de carbone, qui a une densité comprise dans l'intervalle de 0,900 à 0,929, un MFR de 15 à 20, un rapport $M_w/M_n$ de 2,5 à 3,0 et un point de fusion compris dans l'intervalle de 95°C à 135°C.

**2.** Film suivant la revendication 1, dans lequel le PELBD est de plus **caractérisé par** un MI($I_2$) de 0,01 à 5,0.

**3.** Film suivant la revendication 1, dans lequel l'alpha-oléfine est l'hexène.

**4.** Film suivant la revendication 1, dans lequel ledit impact de masse tombante est compris entre plus de 800 jusqu'à 2000.

**5.** Film suivant la revendication 1, dans lequel ladite densité est comprise dans l'intervalle de 0,911 à 0,929.

**6.** Film suivant la revendication 1, dans lequel ladite densité est comprise dans l'intervalle de 0,911 à 0,922.

**7.** Film suivant la revendication 1, qui est **caractérisé par** un point de fluage mesuré selon la norme ASTM D-882, qui est compris dans l'intervalle de 0,7 à 3000 psi (4,8 à 21 000 kPa).

**8.** Film suivant la revendication 7, qui est **caractérisé par** un point de fluage mesuré selon la norme ASTM D-882, qui est compris dans l'intervalle de 1,4 à 3000 psi (9,6 à 21 000 kPa).